# EUROPEAN PATENT APPLICATION

(11) **EP 4 764 989 A1**
(43) Date of publication of application: **24.06.2026**
(21) Application number: 25152617.4
(22) Date of filing: 17.01.2025
(51) Int. Cl.: G06Q 10/083, G06Q 10/0832, G06Q 10/0835, G06Q 50/40, G06Q 10/08

(54) **GAS CYLINDER TRANSPORTATION SCHEDULING SYSTEM**

(30) Priority: 23.12.2024 TW 113150265
(71) Applicant: EGK Technology Co., Ltd., Kaohsiung City 814037 (TW)
(72) Inventor: Lin, Yi-Cheng, Kaohsiung City 814037 (TW); Liu, Chun-Yu, Kaohsiung City 814037 (TW); Chen, Jia-Wei, Kaohsiung City 814037 (TW)
(74) Representative: Stevens Hewlett & Perkins

(57) **Abstract**

To solve the issues where scheduling systems typically require schedulers to develop transportation plans based on experience and manual calculations, which is time-consuming and prone to errors, provided is a gas cylinder transportation scheduling system, including: a data integration and analysis module, integrating customer addresses, product information, transportation restrictions, etc., to generate an analyzed result; a route planning module, designing an optimal route based on GIS and the real-time traffic data; a vehicle and driver allocation module, optimizing allocation based on routes and driver conditions; a dynamic adjustment module, performing real-time monitoring, and, in the event of abnormality, adjusting routes and resources; a customer notification module, providing automatic notifications and inquiring functions; a data recording and analysis module, recording and analyzing the transportation data; and a system learning and optimization module, utilizing machine learning to improve computational logic, thereby achieving high-efficient scheduling and continuous optimization.

## Description

### CROSS-REFERENCE TO RELATED APPLICATION

This application claims the priority of Taiwanese patent application No. 113150265, filed on December 23, 2024, which is incorporated herewith by reference.

### BACKGROUND OF THE INVENTION

### 1. Field of the Invention

The present invention relates to the technical field of logistics transportation scheduling, specifically to a gas cylinder transportation scheduling system used for optimizing the allocation and dispatch of transportation resources. It addresses the problems existing in traditional transport processes, such as inaccurate transport route planning, low vehicle and driver allocation efficiency, inadequate ability to respond to traffic abnormality, delays in customer notifications, and lack of data analysis and optimization capabilities. The system integrates multiple data sources, utilizes advanced geographic information technology and machine learning methods, effectively improving transportation efficiency, reducing operation costs, and enhancing customer satisfaction.

### 2. The Prior Arts

In the field of gas cylinder transportation scheduling, traditional techniques and methods primarily rely on manual scheduling and basic logistics management systems. These systems typically require schedulers to develop transportation plans based on experience and manual calculations, which is not only time-consuming but also prone to errors.

Due to the high dependence on manual labor, traditional gas cylinder transportation scheduling often relies on human experience and manual operations. This approach is not only time-consuming but also prone to human errors, especially when handling a large number of orders or complex routes, it is difficult to ensure the efficiency and accuracy. Furthermore, it is also difficult to train and develop the schedulers. In addition, traditional systems often lack real-time data updating and dynamic adjustment capabilities, making it challenging to quickly respond to sudden order changes or transport route adjustments. As logistics demand increases and customer expectations rise, these systems fall short in terms of efficiency and accuracy. Existing solutions often fail to effectively integrate multiple data sources, such as inventory status, vehicle locations, and traffic conditions, leading to improper resource allocation and increased transportation costs. The limitations of these technologies present an opportunity to develop a new cloud-based SaaS platform that can optimize the gas cylinder transportation scheduling in a more intelligent and automated way.

### SUMMARY OF THE INVENTION

To address the aforementioned problems, an objective of the present invention is to provide a gas cylinder transportation scheduling system, which achieves data integration and intelligent analysis, optimal route planning, high-efficient vehicle and driver allocation, and dynamic responses to abnormal situations through the collaboration of multiple modules. This system integrates Geographic Information System (GIS), real-time traffic data, and machine learning technology, thereby can generate optimal solutions based on customer's demands, transportation constraints, and real-time conditions, and enhance the customer's transportation experience through the automatic notification function. In addition, this system also has data recording and analysis capabilities, continuously improving transportation efficiency and resource utilization by mining and optimizing the historical data, thereby providing an intelligent solution for the logistics transportation industry.

The present invention provides a gas cylinder transportation scheduling system, comprising:
a data integration and analysis module, integrating and analyzing data including a customer's delivery location, a product information, delivery and receipt quantities, a specified delivery time period, a load limit of an available transport vehicle, and a driver-related information, and generating and outputting its analyzed result;
a route planning module, interacting with the data integration and analysis module and receiving the analyzed result of the data integration and analysis module, and generating an optimal transport route based on a geographic information system (GIS) and a real-time traffic data in consideration of a shortest distance, a traffic condition, a fuel consumption, and a load limit of vehicle, and outputting a planned result;
a vehicle and driver allocation module, allocating a vehicle and a driver suitable for transporting based on the planned result of the route planning module, and optimizing its allocated result based on a driver license type, a work time restriction, and a workload information provided by the data integration and analysis module;
a dynamic adjustment module, interacting with both the route planning module and the vehicle and driver allocation module and receiving the allocated result, continuously monitoring a vehicle location and the traffic condition, and, in an event of abnormality, updating the transport route or reallocating a vehicle and a driver, and outputting a notification message and simultaneously notifying a relevant personnel;
a customer notification module, interacting with the dynamic adjustment module and receiving the notification message, automatically generating a delivery notification and sending an estimated delivery time and a delay information to the customer via an email or a short message, and providing a real-time order status inquiring function;
a data recording and analysis module, receiving data from the data integration and analysis module, the route planning module, the vehicle and driver allocation module, and the dynamic adjustment module, recording a relevant data during transportation, and outputting its analyzed result; and
a system learning and optimization module, utilizing the analyzed result of a historical data and a transport record provided by the data recording and analysis module to perform machine learning, optimizing a computational logic of the data integration and analysis module, the route planning module, and the vehicle and driver allocation module to improve future scheduling efficiency.

In one embodiment, the data integration and analysis module classifies priorities based on characteristics of different orders, and flags the orders that require specific types of transport vehicles.

In one embodiment, the route planning module uses a geographic data-based algorithm to generate the optimal transport route by comprehensively considering multiple route factors, and ensures that each vehicle remains within its load limit.

In one embodiment, the vehicle and driver allocation module selects an appropriate driver based on a historical work data and a safety record of the driver.

In one embodiment, the dynamic adjustment module updates a route planning based on the real-time traffic data, and, in the event of abnormality, reallocates resources.

In one embodiment, the customer notification module provides a real-time order tracking function based on a mobile application.

In one embodiment, the data recording and analysis module generates a transportation efficiency report, and automatically identifies a low-efficient segment during transportation.

In one embodiment, the system learning and optimization module predicts an order demand change in future based on a historical transportation data, and actively adjusts a scheduling strategy.

### BRIEF DESCRIPTION OF THE DRAWINGS

FIG. 1 is a schematic diagram of a gas cylinder transportation scheduling system of the present invention;
FIG. 2 is a schematic diagram of a participant of the gas cylinder transportation scheduling system of the present invention; and
FIG. 3 is a schematic diagram of the participant in an embodiment of the gas cylinder transportation scheduling system of the present invention.

### DETAILED DESCRIPTION OF THE PREFERRED EMBODIMENT

Identical reference numbers in different drawings represent identical or similar components and, therefore, perform similar functions. Furthermore, to simplify the description, well-known steps and components have been omitted. Additionally, in the following detailed description of the present invention, many specific details are provided to give a comprehensive understanding of the present invention. However, it is understood that the present invention can be implemented without these specific details. In other instances, well-known methods, procedures, and components are not described in detail to avoid unnecessarily obscuring various aspects of the present invention. Examples of various embodiments will be further explained and described below. It is understood that the descriptions herein are not intended to limit the claims to the specific embodiments described. Instead, they are intended to cover alternatives, modifications, and equivalents that may fall within the spirit and scope of the present invention as defined by the appended claims.

The terms used in the present specification are intended solely to describe specific embodiments and are not meant to limit the content of the present invention. As used herein, the singular forms, such as "a" or "an" may also include the plural forms unless explicitly stated otherwise. It will also be understood that when used in this specification, the terms "comprising" and "including" specify the presence of stated features, elements, operations, components, and/or parts, but do not exclude the presence or addition of one or more other features, elements, operations, components, parts, and/or portions thereof.

Hereinafter, the embodiments of the present invention will be clearly and comprehensively described in combination with the drawings in the embodiments of the present invention. It is obvious that the described embodiments are only part of the embodiments of the present invention but not all embodiments. Based on the embodiments of the present invention, all other embodiments obtained by those skilled in the art without making creative efforts shall fall within the scope to be protected of the present invention.

Numerous specific details are provided in the following description to facilitate a full understanding of the present invention. However, the present invention may also be implemented in ways different from those described herein. Those skilled in the art may make similar adaptations without departing from the spirit of the present invention, and thus the present invention is not limited to the specific embodiments disclosed below.

Furthermore, the present invention is described in detail in combination with schematic diagrams. When describing the embodiments of the present invention in details, cross-sectional diagrams representing the structure of the device may be partially enlarged without following the general proportions for convenient illustration purposes. The relative sizes between the device components do not represent the actual sizes, and the schematic diagrams are examples only and do not limit the scope to be protected of the present invention. Additionally, in actual production process, three-dimensional spatial sizes of length, width, and height should be included.

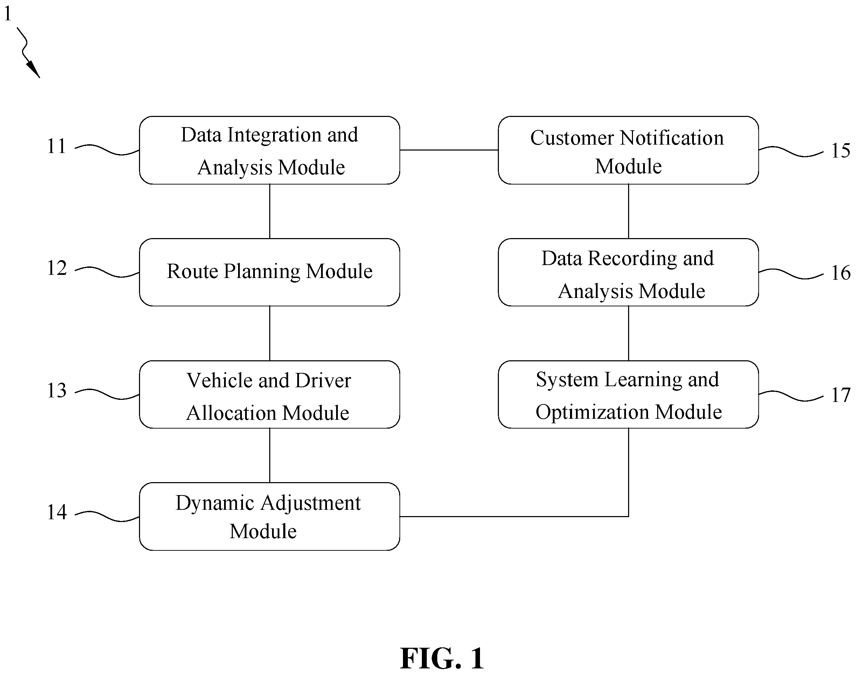

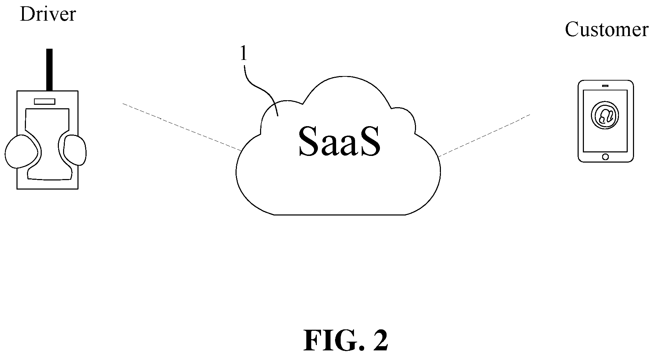

As shown in FIGS. 1, 2, and 3, a gas cylinder transportation scheduling system 1 of the present invention is provided on a cloud-based SaaS platform. Smart devices such as smartphones and tablets used by customers and drivers, as well as a server monitoring equipment, can be connected to the gas cylinder transportation scheduling system 1 via the internet. The system 1 includes a data integration and analysis module 11, a route planning module 12, a vehicle and driver allocation module 13, a dynamic adjustment module 14, a customer notification module 15, a data recording and analysis module 16, and a system learning and optimization module 17.

The data integration and analysis module 11 integrates and analyzes data including a customer's delivery location, a product information, delivery and receipt quantities, a specified delivery time period, a load limit of an available transport vehicle, and a driver-related information, and generates and outputs its analyzed result.

The route planning module 12 interacts with the data integration and analysis module 11 and receives the analyzed result of the data integration and analysis module 11, and generates an optimal transport route based on a geographic information system (GIS) and a real-time traffic data in consideration of a shortest distance, a traffic condition, a fuel consumption, and a load limit of vehicle, and outputs a planned result.

The vehicle and driver allocation module 13 allocates a vehicle and a driver suitable for transporting based on the planned result of the route planning module 12, and optimizes its allocated result based on a driver license type, a work time restriction, and workload information provided by the data integration and analysis module 11.

The dynamic adjustment module 14 interacts with both the route planning module 12 and the vehicle and driver allocation module 13 and receives the allocated result, continuously monitors a vehicle location and the traffic condition, and, in an event of abnormality, updates the transport route or reallocating a vehicle and a driver, and outputs a notification message and simultaneously notifies a relevant personnel.

The customer notification module 15 interacts with the dynamic adjustment module 14 and receives the notification message, automatically generates a delivery notification and sends an estimated delivery time and a delay information to the customer via an email or a short message, and provides a real-time order status inquiring function.

The data recording and analysis module 16 receives data from the data integration and analysis module 11, the route planning module 12, the vehicle and driver allocation module 13, and the dynamic adjustment module 14, records a relevant data during transportation, and outputs its analyzed result.

The system learning and optimization module 17 utilizes the analyzed result of a historical data and a transport record provided by the data recording and analysis module 16 to perform machine learning, optimizes a computational logic of the data integration and analysis module 11, the route planning module 12, and the vehicle and driver allocation module 13 to improve future scheduling efficiency. Machine learning models (such as reinforcement learning or deep learning) are applied to optimize the transport routes in consideration of various factors, like road conditions, traffic peak hours, and load limits of vehicles, continuously learn and adjust strategies to optimize route planning, and finally improve transportation efficiency, reduce delays, and lower fuel consumption.

In an embodiment of the present invention, the data integration and analysis module 11 can classify priorities based on characteristics of different orders, and flag the orders that require specific types of transport vehicles. Urgent or high-value orders are prioritized to ensure timely delivery of critical orders, avoiding losses due to delays. The transportation resources are reasonably allocated to reduce the occupation of resources by low-priority orders. The orders with specific vehicle requirements (such as refrigerated cylinders or special chemical gases) are properly allocated to prevents rescheduling or additional costs due to misallocation, and reduce the failure rate of transportation due to mismatched vehicle types, thereby lowering the risk and costs. The order requirements are accurately identified to ensure that specific conditions (such as temperature control or overload restrictions) are met, thereby enhancing customer satisfaction. The orders from customers with high requirements are flagged and prioritized, thereby building good collaboration and trust. More reasonable routes and resource allocation schemes generated based on the order priorities to optimize the scheduling strategies. The data support is provided to managers to quickly formulate response strategies for abnormal situations. Historical data on priorities and orders with special requirements are collected to assist the system's learning module in more accurate classifications and predictions. Through data analysis, transportation planning logic and resource allocation modes are improved to achieve continuous optimization.

Variable factors to be considered in cylinder transportation include: fully-filled weight of the gas cylinders, bottom surface area of the cylinders, the need for cage loading, and gas incompatibility. For example, if a vehicle has a load capacity of 5,000 kilograms, and the fully-filled weight of a single hydrogen gas cylinder is 68 kilograms, the vehicle could theoretically transport 73 cylinders at most. However, as such cylinders require cage loading, where each cage weighs 120 kilograms and can loads 15 cylinders, the vehicle actually could transport only 64 cylinders at most. Furthermore, practical situations rarely involve transporting only one type of gas in a vehicle, the cylinder specifications may vary in size, and the customers may require cylinder recycling services. These complex factors significantly affect the vehicle load capacity and route planning in actual transportation scheduling.

The following is a specific transportation scenario analysis, which highlights the need for a transportation scheduling platform to accurately handle the complex loads and route planning logic, assuming that this transportation task involves:

- Newly shipped hydrogen gas cylinders 40 cylinders (loaded in 3 cages)
- Cylinder weight: 40 × 68 kg = 2,720 kg
- Cage weight: 3 × 120 kg = 360 kg
- Total outbound load: 2,720 + 360 = 3,080 kg

Outbound load characteristics:
- only accounts for newly shipped cylinders
- does not include recycled cylinders
- complies with the vehicle's 5,000 kg load limit
- reserves space for transporting recycled cylinders on the return trip

Considerations for return transport:
- 30 recycled empty cylinders
- 2 specialized cages
- may require additional scheduling and a different route from the outbound trip

In addition, the drivers can use mobile task devices to check their task schedules. When temporary changes occur during transportation, information on such as route updates and task sequence adjustments can be instantaneously synchronized to the mobile task devices through OTA (over-the-air) technology. This allows the drivers to be passively informed the latest task updates, thereby enhancing their responsiveness and mobility. For an intelligent transportation scheduling platform, managing such complex loads and classification calculations requires highly intelligent algorithms capable of instantaneously adjusting the loading schemes, thereby ensuring safety, efficiency, and cost-effectiveness of transportation.

In an embodiment of the present invention, the route planning module 12 uses a geographic data-based algorithm to generate the optimal transport route by comprehensively considering multiple route factors, and ensures that each vehicle remains within its load limit. This improves the transportation efficiency by selecting routes with the least traffic congestion based on the real-time traffic data, thereby reducing delays caused by congestion. The automated route planning minimizes the manual intervention, and facilitates the rapid generation of optimal transportation plans. The route with the shortest distance or the lowest fuel consumption is selected to reduce energy consumption during transportation. The optimization of routes reduces the wear and tear caused by frequent stops, starts and detours. In the route planning, the load limits of vehicles are strictly considered to ensure compliance with transportation regulations, and reduce the risks due to overloading. Safe routes are selected for specific goods (such as cylinders of hazardous gases) to avoid high-risk areas (such as schools and hospitals). The reliable route planning ensures on-time delivery, and reduces the customer's dissatisfaction due to delays. In the event of traffic abnormality or sudden situations, the routes can be quickly re-planned to reduce the impact. By integrating the load limits and the route optimization, overloading or empty transportation of some vehicles can be avoided, thereby achieving reasonable resource allocation. Through optimal route planning, the transportation volume that can be completed per unit time can be increased. The historical transport routes and their actual performance are recorded, thereby providing a basis for system improvements, to optimize the route planning algorithm in the future. The geographic data-based algorithm also enables multi-scheme simulations during the planning stage, helping the managers select the best scheme.

In an embodiment of the present invention, the vehicle and driver allocation module 13 selects an appropriate driver based on a historical work data and a safety record of the driver. This reduces the risk of accidents, especially during the transportation of hazardous objects (such as gas cylinders), the reliability and safety during transportation are enhanced. Tasks are allocated based on the driver's historical working hours and rest conditions to ensure that the drivers work under optimal conditions, thereby reducing fatigue-related incidents.

The vehicle and driver allocation module 13 also characterized in:
- Proper Allocation based on Specialty and Task: drivers with relevant experience are selected to specific tasks (e.g., long-distance transportation or hazardous goods delivery), to improve the accuracy and efficiency of task execution; drivers familiar with certain routes or vehicles can adapted more quickly, thereby reducing unnecessary route deviations or operating errors.
- Reducing Wear and Tear and Maintenance Costs: drivers with good driving behavior are selected to enable lower fuel consumption and reduced wear and tear of vehicle, thereby extending the vehicle's lifespan; this also prevents economic losses caused by safety issues, such as fines, increased insurance costs, or damage to goods due to accidents or violations.
- Balanced Workload: work is allocated based on historical data to prevent overburdening or underutilizing of certain drivers, thereby maintaining reasonable work intensity and rest schedules; the transparent allocation system prevents human interference, thereby increasing the driver's acceptance and trust in the scheduling arrangements.
- Data-driven Improvements: the driver's historical data is accumulated to provide a basis for future system optimization and driver management, such as training needs or performance evaluations; the driver's task types and performance data are recorded to help identify training needs, and further enhances the overall system efficiency and driver capabilities.
- Compliance with Regulations: the allocation process are ensured to comply with local labor laws (e.g., driving time limitations) and traffic regulations, thereby avoiding legal disputes; transportation tasks involving hazardous goods are allocated based on the driver's license types and the training records, to ensure compliance with relevant legal requirements.

In an embodiment of the present invention, the dynamic adjustment module 14 can update a route planning based on the real-time traffic data, and, in the event of abnormality, reallocate resources. This improves transportation timeliness by selecting the best alternative routes based on real-time traffic data, thereby ensuring that goods are delivered on time and reducing losses caused by delays. The plans are quickly adjusted to respond to unexpected events (such as road closures or accidents), thereby enhancing the plan flexibility and emergency response capabilities. By avoiding congested roads and selecting high-efficient routes, fuel consumption and additional waiting time costs are reduced. Resources are promptly reallocated to repeated transportation or delays caused by vehicle or route issues. In the event of abnormality, other available vehicles or drivers are quickly allocated to maximize the utilization of available resource and avoid resource idling. Dynamic adjustments ensure reasonable resource allocation, thereby preventing overburdening of certain routes or vehicles. When the routes or plans change, the updated information (such as the estimated delivery time) is immediately notified to the customer via the customer notification module 15, thereby increasing the transparency. Even in an unexpected situation, the high-efficient order handling can still be ensured, thereby building the customer's trust in the system. Data from the adjustment process is recorded for future analysis, helping improvements of algorithm and predictive capabilities. By analyzing historical abnormal events, the system's ability to respond to similar situations in the future is improved, thereby achieving a long-term optimization. When updating routes based on the traffic and environmental data, areas with potential safety risks due to accidents or adverse weather conditions are avoided. The immediate adjustments reduce the risk of transportation disruptions caused by abnormal situations, thereby ensuring safe delivery of goods.

In an embodiment of the present invention, the customer notification module 15 can provide a real-time order tracking function based on a mobile application. The customers can check the order status (such as the estimated delivery time and the current location) any time, thereby reducing the uncertainty regarding transportation progress. If any issues (such as delays) arise, the customers can immediately contact the customer service system to make a request or modify the plan. The real-time tracking function reduces the need for customers to inquire the order status, thereby lowering the workload of the customer service system. The system automatically generates and pushes updated information, thereby keeping the customers informed any time without manual intervention. By providing transparent processes and precise data displays, the customer's trust and satisfaction with the company's transportation services are enhanced. The tracking function of the high-tech mobile application demonstrates the company's professionalism and modern management capabilities. In the event of abnormality, the customers are automatically notified of the reasons for delays and the latest progress, thereby can reduce the customer's dissatisfaction with delays. For example, pushing related remedial measures (such as refunds or discounts) demonstrates the company's care and sense of responsibility. Convenient tracking functions enhance customer experience, thereby attracting more users to choose this service. The customer's behavior data (such as inquiry frequency and feedback) is recorded to help the company optimize the application and the operation strategies. With the population of mobile devices, real-time tracking functions satisfy the customer's expectations for convenient services. Such function can be adapted to smartphones and tablets, thereby expanding the customer's usage range and convenience.

In an embodiment of the present invention, the data recording and analysis module 16 can generate a transportation efficiency report, and automatically identify a low-efficient segment during transportation. By analyzing the data, the bottlenecks during transportation (such as traffic delays, vehicle idling, and too long loading/unloading times) are found, and suggestions for improvement can be provided. The route strategies are adjusted to address common issues by integration with the efficiency reports, thereby improving the overall transportation efficiency. By analyzing the resource usage conditions (such as fuel consumption and vehicle maintenance frequency), unnecessary costs are reduced. The operating processes are optimized based on the efficiency data to enhance the speed of completing a single delivery, thereby reducing the time costs. The key data in the reports provides the managers with well-founded recommendations to help develop more precise transportation strategies. The performances of different vehicles, routes, or drivers are compared to identify high-efficient and low-efficient transportation modes, thereby providing a basis for performance evaluation and improvement. Low-efficient segment's data is used as the input of the system's learning model to continuously optimize the algorithms of the route planning and the resource allocation, thereby enhancing the level of intelligence. By analyzing the historical data, potential problems (such as high traffic time periods or frequently malfunctioned vehicles) can be predicted, and preventive plans can be made in advance. After optimizing the low-efficient segments, the delivery time can be predicted more accurately, thereby reducing the customer's dissatisfaction due to delays. The improvement in transportation efficiency directly affects customer experience and helps build a reliable brand image. By the analysis report, issues such as vehicle overload, speeding, or driver's overtime work can be detected, thereby reducing legal risks. By improving the low-efficient segments, such as avoiding high-risk areas or long-time driving, the transportation safety is enhanced. The data provided by the report helps systematically improve the operating processes, achieving long-term and stable improvements on efficiency. The vehicles, drivers, and other resources are reasonably allocated based on the efficiency analysis results, thereby preventing over- or under-allocation.

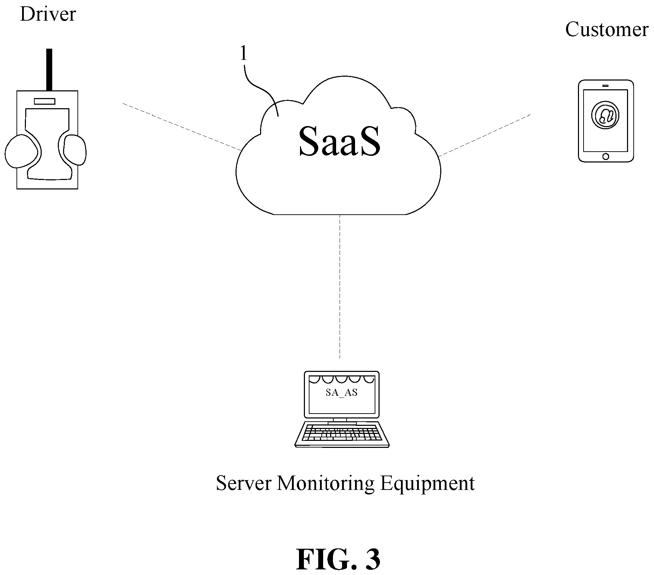

In an embodiment of the present invention, the system learning and optimization module 17 can predict an order demand change in future based on a historical transportation data, and actively adjust a scheduling strategy. According to the predicted results of demands, the vehicles, drivers, and other resources are allocated in advance to avoid resource shortages during peak periods or resource idling during low-demand periods. The scheduling is optimized to reduce the driver's overtime working or the vehicle's overload operation, thereby improving the stability during transportation. The scheduling strategy is automatically updated based on demand fluctuations, to enable a quick response to sudden order peaks or temporary demand changes. When a high demand is predicted, the route planning and resource allocation are optimized in advance to reduce transportation delays caused by insufficient planning. Over-imputing of resources can be avoid by accurate demand prediction, thereby reducing the vehicle idling and the operation costs. Combinations of high-efficient routes and vehicles are planned based on the predicted distribution of order density, to minimize the fuel and time costs in a maximum extent. By accurate demand prediction, the system can better meet the customer's requirements for delivery time, thereby increasing customer satisfaction. Even during abnormal fluctuations of demands, the system can still remain stable, thereby enhancing the customer's trust in the system. Changes of market demands in the future are predicted by analyzing the historical data, to help the company develop long-term strategies and expansion plans. Recommendations for selling or promotional strategies are proposed based on the demand distributions, to attract more customers. The system's learning model is optimized based on the predicted results of demands and the actual execution conditions, to improve accuracy and practicality of predicting for the future trend. Multiple factors such as time, location, and order types are comprehensively considered to generate more precise predicted results, thereby optimizing the decision-making process. By actively adjusting the strategies, the system maintains its competitive edge in the market, and attracts more users to choose its service. Flexible transportation solutions can be provided based on different demand predictions to meet diverse customer demands. As shown in FIG. 3, a server monitoring equipment and/or a computer can monitor the system operation status and the traffic load, thereby supporting monitoring and adjustments to the backend data.

In summary, the gas cylinder transportation scheduling system provided by the present invention integrates advanced functions such as data analysis, route planning, dynamic adjustment, and vehicle and driver allocation, to achieve a high-efficient and precise transportation scheduling. This system can automatically process large amounts of complex data, thereby reducing human errors and improving the utilization efficiency of transportation resources. The dynamic monitoring and real-time adjustment function ensures that in the event of abnormality, quick response and plan adjustments can be achieved, thereby enhancing the flexibility and reliability of the overall service. In addition, the application of machine learning technology further optimizes the scheduling logic, thereby achieving continuous improvement and efficiency enhancement. This not only improves transportation efficiency but also enhances customer experience, reduces operation costs, and has significant practical application value in the transportation management of special goods such as gas cylinders.

Moreover, by automatically executing various scheduling tasks, the need for manual intervention is greatly reduced, thereby shortening the time required for transportation planning, and minimizing the risks caused by human errors. This system can real-time analyze and process various transportation conditions, and dynamically adjust the transportation plans based on various demand changes, thereby achieving a more flexible and high-efficient transportation management. In addition, the system's machine learning module can continuously optimize the computational logic, predict demands in the future based on the historical data, thereby further enhancing the scheduling accuracy and the efficiency of resource allocation. In summary, the present invention can significantly improve the overall efficiency of transportation operations, providing a more intelligent and reliable transportation solution for the gas cylinder industry.

The present invention has been described with reference to the preferred embodiments thereof. However, it is obvious to those skilled in the art that a variety of modifications and changes may be made without departing from the scope of the present invention. Therefore, the scope of the present invention should not be limited to the embodiments described, but should be defined by the appended claims and their equivalents.

## Claims

1. A gas cylinder transportation scheduling system, comprising:
a data integration and analysis module, integrating and analyzing data including a customer's delivery location, a product information, delivery and receipt quantities, a specified delivery time period, a load limit of an available transport vehicle, and a driver-related information, and generating and outputting its analyzed result;
a route planning module, interacting with the data integration and analysis module and receiving the analyzed result of the data integration and analysis module, and generating an optimal transport route based on a geographic information system (GIS) and a real-time traffic data in consideration of a shortest distance, a traffic condition, a fuel consumption, and a load limit of vehicle, and outputting a planned result;
a vehicle and driver allocation module, allocating a vehicle and a driver suitable for transporting based on the planned result of the route planning module, and optimizing its allocated result based on a driver license type, a work time restriction, and a workload information provided by the data integration and analysis module;
a dynamic adjustment module, interacting with both the route planning module and the vehicle and driver allocation module and receiving the allocated result, continuously monitoring a vehicle location and the traffic condition, and, in an event of abnormality, updating the transport route or reallocating a vehicle and a driver, and outputting a notification message and simultaneously notifying a relevant personnel;
a customer notification module, interacting with the dynamic adjustment module and receiving the notification message, automatically generating a delivery notification and sending an estimated delivery time and a delay information to the customer via an email or a short message, and providing a real-time order status inquiring function;
a data recording and analysis module, receiving data from the data integration and analysis module, the route planning module, the vehicle and driver allocation module, and the dynamic adjustment module, recording a relevant data during transportation, and outputting its analyzed result; and
a system learning and optimization module, utilizing the analyzed result of a historical data and a transport record provided by the data recording and analysis module to perform machine learning, optimizing a computational logic of the data integration and analysis module, the route planning module, and the vehicle and driver allocation module to improve future scheduling efficiency.

2. The gas cylinder transportation scheduling system according to claim 1, wherein the data integration and analysis module classifies priorities based on characteristics of different orders, and flags the orders that require specific types of transport vehicles.

3. The gas cylinder transportation scheduling system according to claim 1, wherein the route planning module uses a geographic data-based algorithm to generate the optimal transport route by comprehensively considering multiple route factors, and ensures that each vehicle remains within its load limit.

4. The gas cylinder transportation scheduling system according to claim 1, wherein the vehicle and driver allocation module selects an appropriate driver based on a historical work data and a safety record of the driver.

5. The gas cylinder transportation scheduling system according to claim 1, wherein the dynamic adjustment module updates a route planning based on the real-time traffic data, and, in the event of abnormality, reallocates resources.

6. The gas cylinder transportation scheduling system according to claim 1, wherein the customer notification module provides a real-time order tracking function based on a mobile application.

7. The gas cylinder transportation scheduling system according to claim 1, wherein the data recording and analysis module generates a transportation efficiency report, and automatically identifies a low-efficient segment during transportation.

8. The gas cylinder transportation scheduling system according to claim 1, wherein the system learning and optimization module predicts an order demand change in future based on a historical transportation data, and actively adjusts a scheduling strategy.
